# EUROPEAN PATENT SPECIFICATION

(11) **EP 1 190 402 B1**
(45) Date of publication and mention of the grant of the patent: **06.10.2004**
(21) Application number: 00938370.4
(22) Date of filing: 06.06.2000
(51) Int. Cl.: G08B 25/14, G08B 26/00, G08B 25/10, G08B 25/08

(54) **PROGRAMMABLE SECURITY ALARM SYSTEM**
PROGRAMIERBARES ALARMSYSTEM
SYSTEME D'ALARME DE SECURITE PROGRAMMABLE

(30) Priority: 07.06.1999 CA 2274572
(43) Date of publication of application: 27.03.2002
(73) Proprietor: Strategic Vista International Inc., Markham, Ontario L3R 4C1 (CA)
(72) Inventor: KLIGMAN, Joel, Toronto, Ontario M3H 1Z1 (CA); KLEIN, Bernie, Toronto, Ontario M5R 2K9 (CA)
(74) Representative: Butler, Lance
(86) International application number: PCT/CA2000/000662
(87) International publication number: WO 2000/075900

(56) References cited:
- WO-A-98/49663
- WO-A-99/35623
- US-A- 4 581 606
- US-A- 4 772 876
- "WLS900 Marquis Wireless. Technical specifications." [Online] February 1999 (1999-02) , DIGITAL SECURITY CONTROL , ONTARIO, CANADA XP002150081 Retrieved from the Internet: <URL: www.dsc.com> [retrieved on 2000-10-13] the whole document
- "LMX3162 Enabling 2.4GHz applications" [Online] 23 February 1999 (1999-02-23) , NATIONAL SEMICONDUCTOR , USA XP002150082 Retrieved from the Internet: <URL: http://www2.national.com/appinfo/wireless/ tech/ismtech.pdf > [retrieved on 2000-10-13] page 3 page 10
- PATENT ABSTRACTS OF JAPAN vol. 017, no. 421 (E-1409), 5 August 1993 (1993-08-05) & JP 05 083412 A (TOKYO GAS CO LTD), 2 April 1993 (1993-04-02)

## Description

### Field of Invention

This invention relates to security alarm systems. In particular, this invention relates to a programmable security alarm system providing reliable two-way communication between a main control unit and a plurality of peripheral devices.

### Background of the Invention

Security alarm systems are used in homes and in commercial and industrial facilities, for monitoring the premises to detect intruders, fire and environmental hazards such as carbon monoxide contamination. There are two types of security alarm systems: wired and wireless. Although both have been proven effective over many years, security alarm systems are still utilized in a minority of premises because of the cost and limitations of conventional systems.

Much of the cost of installing a wired alarm system is in the installation of the wiring, since the peripheral devices such as sensors (typically contact, motion detectors and vibration detectors) and alarm condition indicators (such as sirens, bells and telephone line seizing devices in the case of monitored systems) are dispersed throughout the premises and thus well remote from the control unit. In general it is advantageous to divide the premises into "zones" which are monitored independently, and although the sensors within a zone can be wired in series the zone circuits must be connected to the control unit in parallel in order for the control unit to be able to discriminate between zones.

A lot of wiring is required to adequately cover vulnerable entry points divided into a desirable number of zones, and a service technician installing such a system must thus spend considerable time fishing wires through walls in order to make the alarm system unobtrusive. This is a time consuming and costly procedure, and it is not always possible to conceal the wiring in structures such as condominiums and apartment buildings, older houses and houses with finished basements.

Wireless alarm systems are also known. In these systems a plurality of different kinds of sensors distributed about the premises each emit a radio frequency (RF) signal with a characteristic frequency. The signal is transmitted when the sensor detects an intrusion, for example a point contact which is broken when a window is forced open or a motion detector which senses motion within its detection field. A receiver contained in a control unit monitors the various RF signals and signals a control unit when one or more of these signals is transmitted, indicating an alarm condition.

Wireless alarm systems are considerably easier to install, because peripheral sensors need only be mounted and do not have to be wired to the control unit. However, in a typical wireless system there are a limited number of RF channels available for peripheral sensors, and the cost of the system increases considerably as more channels are added.

Further, these systems provide only one-way communication, i.e. sensor-to-base signals, and thus alarm indication peripherals such as audible indicators and line seizing devices must still be wired to the control unit, which increases installation costs. In some cases the RF signals emitted by the sensors have a limited range before they become subject to interference and unreliability, which can limit the location of such peripherals and/or the control unit itself. Also, the one-way communication of such systems precludes any verification procedure, which can result in false alarms caused by equipment malfunction and lead to costly and unnecessary response by emergency services personnel.

Moreover, the versatility of both wired and wireless alarm systems is in part determined by the capacity to set and change parameters of the system. However, with increased programming capability arises the requirement for a more complex programming interface. This increases the size, complexity and cost of the alarm system. This also increases the complexity of installation, since the limited display window typically incorporated into such devices permits only small amounts of information to be displayed to the installer at any particular time; thus, in a complex system offering many programmable features the installer must be trained to be fully familiar with all of the programming functions and procedures of the device, or is constrained to review extensive operating instructions, in order to properly utilize the more complex features of the system. Accordingly, manufacturers often compromise on the versatility of the alarm system by omitting potentially advantageous features in order to avoid the need to increase the cost and complexity of the programming interface.

### Summary of the Invention

The present invention, as defined in the independent claims, overcomes these problems by providing a wireless security alarm system providing reliable two-way communication between a control unit and a plurality of peripheral devices, including both sensors and alarm indicators. In an embodiment the control unit of the invention operates in conjunction with a cordless telephone, providing instantaneous access to a telephone line for monitoring by a security service or auto-dialing to an emergency number, and allowing the telephone handset to be used as a remote control and user display for setting alarm functions after installation.

In a further embodiment the control unit incorporates an interface for a digital processing device such as a personal computer. This allows the control unit to be programmed to perform a variety of functions using programming software that provides an extensive user interface, thus allowing the alarm system to be extremely versatile while considerably simplifying the installation and setup operations. The ability to connect the system to a computer also provides comprehensive diagnostic capabilities for testing, maintenance and repair of the system, and connection to computer networks, including the Internet.

The system of the invention can accordingly be easily installed by a home or business owner without any special tools and requires no wiring through the premises. The system of the invention provides a large number of channels for monitoring and response to both intrusion and environmental conditions, and can include emergency dialing capabilities for the elderly or small children, and a variety of home automation capabilities (HVAC, etc.).

The alarm system of the invention allows a monitoring service to monitor the premises, and upon detecting an alarm condition to process audio and/or video data allowing a monitoring service to watch and/or listen to events occurring within the premises and dispatch an appropriate emergency response, and to communicate with persons within the premises during an emergency. The peripherals used in system of the invention can be configured through the control unit upon installation, either directly or from a remote location, and automatically or remotely reconfigured if the control unit detects attempts to tamper with peripherals or jam the signals to the control unit; to initiate or discontinue a battery-saving "sleep" mode; and/or to adjust environmental controls or preprogrammed procedures. The auto-dial feature can also be configured remotely, allowing a user to remotely select one or more of a plurality of stored telephone numbers for the emergency dialer.

In a further embodiment this is accomplished by providing the control unit with a built-in digital communicator having full upload and download capabilities, permitting remote programming, alarm reception and verification and analysis of an alarm condition. Where the system is implemented in conjunction with a cordless telephone, an LCD display on the telephone handset displays system status and other desired indicators, and the telephone keypad can be used for data entry and activation or deactivation of the alarm system (optionally with a separate key fob remote control).

The control unit memory may be adapted to store any desired number of alarm events in an event log. This information can be downloaded to the personal computer periodically, to maintain ongoing records relating to the security of the premises.

Utilizing a bi-directional digital communication data link, preferably in the 2.4 GHz frequency range, the alarm system of the invention easily accommodates many different channels each with a unique signal ID code, allowing many more peripherals and zone configurations than a conventional wireless alarm system of comparable cost. The signals are reliable over a large distance, in most environments up to or over 100 meters, permitting integration of alarm systems in different premises of a residential or commercial complex or structure. Where the communications protocol operates in the 2.4 GHz range (or other frequencies with sufficiently wide bandwidth), the system allows for high speed transfer of video and other data, for example from surveillance cameras installed in and around the secured premises.

In one embodiment the system of the invention provides a cellular or two-way radio connection, either as the primary communications line or as a backup in case of sabotage or failure of the telephone line, and a self-testing function for monitoring such events. Optionally connection with the system via two-way pager is provided as a further backup measure and/or for direct user response to an alarm condition. The invention can be applied to all conventional intrusion detection peripherals, including glass breakage sensors, and also to environmental monitoring such as smoke and fire detection, hazardous gas detection, temperature, water and/ or moisture detection, etc. Connection to a local or remote personal computer is also available for expanded operation, detailed system analysis and/or integration with other systems.

The present invention thus provides a security alarm system, comprising one or more peripheral units, and a main control unit comprising an RF transceiver for communicating with the one or more peripheral units, whereby the main control unit receives a signal from the one or more peripheral units to indicate an alarm condition, and a digital communications port, wherein the main control unit can be connected to a digital processing device through the digital communications port, whereby data entered into the digital processing device programs the main control unit.

The present invention further provides a method of programming a security alarm system comprising one or more peripheral units, and a main control unit comprising an RF transceiver for communicating with the one or more peripheral units, whereby the main control unit receives data from the one or more peripheral units to indicate an alarm condition, and a digital communications port, comprising the steps of a. connecting the main control unit to a digital processing device through the digital communications port, and b. entering data into the digital processing device to program the main control unit.

In further aspects of the invention the main control unit communicates data to the one or more peripheral devices to configure and control said peripheral devices; the main control unit comprises a communicator for controlling a transfer of data between the system and a remote location over a communications link; a keypad or a display, or both, are contained in a remote unit, which may be a cordless telephone handset and/or a key chain; in response to an indication of an alarm condition by a sensor, the main control unit requests a status signal from the sensor and/or from one or more neighboring sensors to verify the alarm condition; the main control unit is programmable via a keypad; the transceiver communicates at 2.4 GHz; the peripheral units include sensors comprising one or more of door/window sensors, PIR motion sensors, glass break detectors, environmental sensors (temperature sensors, moisture detectors etc.), smoke detectors, combustion gas detectors, carbon monoxide detectors, alarm indicators; and/or each peripheral unit is characterized by a unique preprogrammed ID code.

### Brief Description of the Drawings

In drawings which illustrate by way of example only a preferred embodiment of the invention,
Figure 1 is a block diagram illustrating a preferred embodiment of the alarm system of the invention, and
Figure 2 is a perspective view of an optional cordless telephone for the embodiment of Figure 1.

### Detailed Description of the Invention

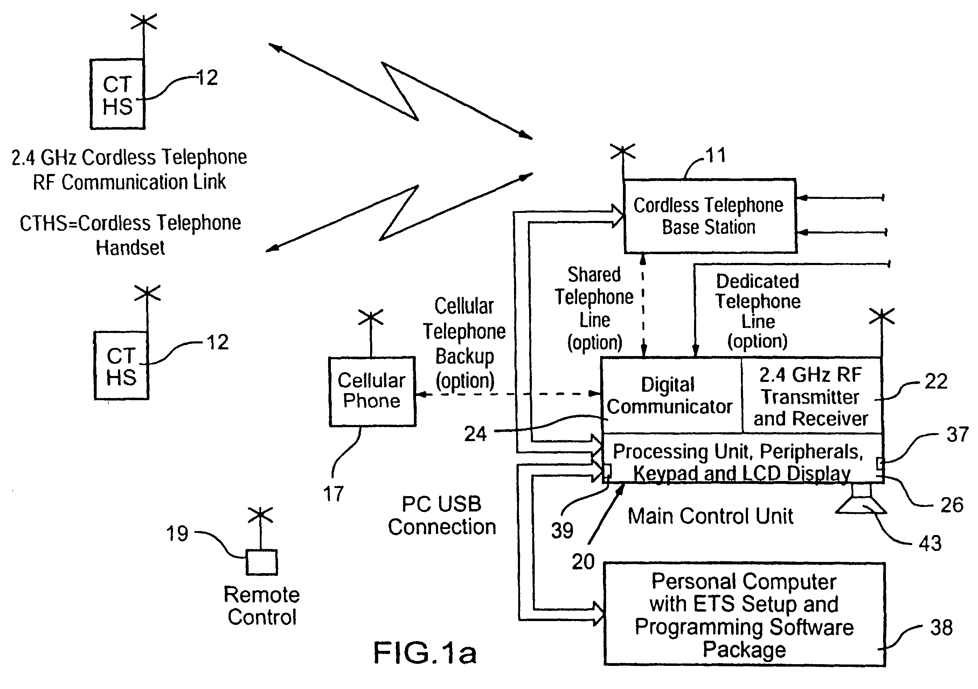

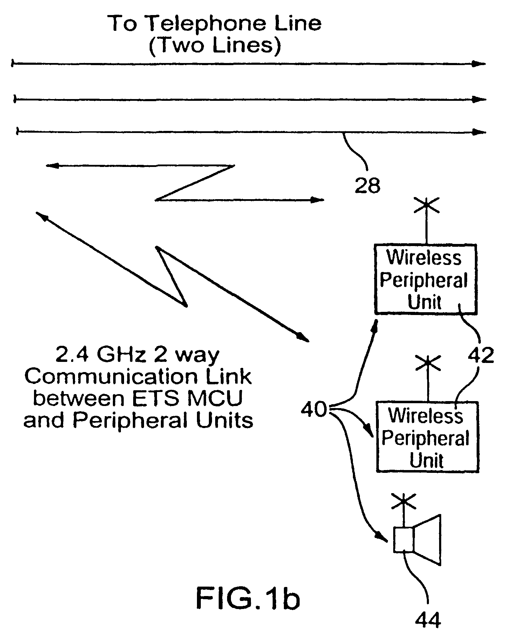

Figure 1 illustrates a preferred embodiment of the security alarm system of the invention. According to the invention, a Main Control Unit (MCU) 20 comprises a wireless transceiver 22 for bi-directional communication with the Peripheral Units 40 including one or more remote sensors 42; digital communicator 24, which controls the data transfer and line seizure functions via telephone link 28, which may be a direct connection to a land line or a wireless connection to a cellular or two-way radio link; a processor 26 for processing communications to and from the Peripheral Units 40 and including a keypad/display driver for processing data input via a built in keypad (not shown) and displaying information on an LCD display (not shown); and an optional home automation link for controlling peripheral devices such as "actuators" (switches or control units), for activating and deactivating appliances, lights etc.

In the preferred embodiment the Main Control Unit 20 communicates with the Peripheral Units 40 via a 2.4 GHz frequency hopping digital spread spectrum RF communications protocol, which is stable over a large distance and resistant to outside interference and ambient noise. Communication preferably occurs at a medium speed (around 115 kbps) through time division multiplexing, however dynamic allocation of the data rate by the MCU 20 allows flexibility when increased throughput or communication reliability is desired for a reduced number of devices. Interference between peripheral signals is prevented by the Main Control Unit 20 which synchronizes peripheral transmissions via the processor 26, whereby the Main Control Unit 20 undertakes a sequential or "cascade" tasking of peripheral sensors 42 and, if status is desired, peripheral alarm indicators 44.

The network topology may be organized in a star configuration, with the MCU 20 as the central entity and the sensors 42 and indicators 44 as the peripheral entities. In addition, a control channel may be provided for network control functions such as standby and controlling, tasking and initializing all Peripheral Units 40.

A higher number of high latency Peripheral Units 40, hundreds in some situations, can be handled by adding collision handling protocols in the application layer. Moreover, used in conjunction with a cordless telephone 10, the cordless telephone handset 12 effectively operates as a Peripheral Unit 40; any number of telephone handsets 12 may be supported by a single telephone 10 used with the invention, and each handset 12 is capable of configuring the alarm system remotely. The system can also be configured by data entered into an external corded or cordless telephone set.

The preferred embodiment of the invention is a 2.4 GHz wireless alarm security system adapted for use with professional monitoring service central station (MSCS), optionally coupled with a fully featured single- or multi-line, single- or multi-handset cordless telephone 10. The invention is designed to be easily and quickly installed, and can be programmed by a person with minimal computer skills using a digital processing device such as a personal computer 38 equipped with suitable software, if necessary with the assistance of the Monitoring Service Operator (MSO) or a Web site featuring instructional information provided by the manufacturer; or optionally by a trained installer using a personal computer 38.

The invention thus comprises a Main Control Unit (MCU) 20 and a plurality of radio frequency (preferably 2.4 GHz) wireless Peripheral Units 40, including peripheral sensors 42 such as wireless security sensor peripheral units (SSPU), wireless environmental sensor peripheral units (ESPU), and wireless actuator peripheral units (APU) 44 such as sirens and strobes. Preferably also the MCU 20 display and keypad provide a means for basic programming and configuration of the system, however as described in greater detail below, in the preferred embodiment all programming and setup of the security alarm system of the invention is advantageously effected through a communications link to a personal computer 38.

In the preferred embodiment the MCU 20 also provides one master access code and nine user programmable access codes; the digital communicator 24 integrated with a two-way modem, for example a 300 baud FSK modem for communication with the MSCS and for remote programming; an optional voice dialer for dialing one or more predetermined telephone numbers to alert the user and/or the MSO of any of a number of predefined conditions according to prerecorded voice messages or alphanumerical codes; a 110 dB siren 43 with user programmable sequences for multiple alarm conditions (for example alarm, panic and life-safety); a power supply with backup battery and trickle charger; a communications port 39 for a PC connection, for example RJ11, USB (universal serial bus), RS232, ethernet, firewire etc., or wireless protocol, for system setup and programming; and optionally an X10 compatibility connection 37 for home automation.

The user control panel may comprise a conventional keypad (not shown), optionally backlit, for dialing and code transmission. The keypad may comprise programmable multi-function keys, which enable response to displayed instructions, as well as special buttons: e.g. home arm, away arm "one touch" arming. The preferred display (not shown) is a backlit, 4x32 alphanumeric and/or graphics LCD which is sufficient to clearly₋;indicate the type of alarm (alarm, panic, and life-safety) upon occurrence, and to provide basic instructions for setup and reconfiguration of major functions Indicators include Power/Battery; OFF (system not working) and otherwise as desired. For example, a combination of red and green LED's can be activated in various permutations of constant or flashing to indicate different conditions (e.g. constant green - power and backup battery OK; flashing green - powered by mains, backup battery low; constant red - powered by backup battery, battery OK; etc.). The user interface on the MCU 20 is thus simple and inexpensive, yet versatile enough to control the major functions and indicators provided by the system.

Two-way digital communication between the MCU 20 and the wireless Peripheral Units 40 provides full control and supervision of the system by the MCU 20 and the MSO. The optional 2.4 GHz cordless telephone 10 may include an expanded keypad 12a with special function buttons 12b and a display 12c for activation, control and supervision of all major system security functions.

The processing platform in the invention preferably features expansion capability for home automation, child monitoring, emergency monitoring, etc. Optional built-in cellular radio or connection to an external cellular phone 17 may be used to provide the primary or a back-up link to the monitoring service central station in case of telephone line failure or sabotage. A real-time clock enables time stamping of all system operations and events, in the preferred embodiment stored in a 50-event log memory.

Wireless Peripheral Units 40 may include sensors 42, for example (without limitation) door/window sensors, PIR motion sensors, glass break detectors, environmental sensors (temperature sensors, moisture detectors etc.), smoke detectors, combustion gas detectors, carbon monoxide detectors; video/audio surveillance devices; alarm indicators 44 such as a siren and/or strobe; and remote controllers 19 such as an emergency (panic) transmitter and/or keychain remote control.

In the preferred embodiment the system of the invention has the capacity for a virtually unlimited number of wireless Peripheral Units 40. Each Peripheral Unit 40 is characterized by its own unique preprogrammed ID code, which is preferably stored in non-volatile memory so that replacing batteries in Peripheral Units 40 will not erase the ID code (or any other preprogrammed parameter). Each Peripheral Unit 40 is equipped with an RF processor comprising a transceiver adapted to transmit a digital RF signal including the characteristic digital ID code which is recognized by the MCU 20.

All peripheral parameters (for example ID code, zone, zone attributes, supervision level etc.) are learned/programmed in the MCU 20 and stored in non-volatile memory. Peripheral parameters can be changed by reprogramming, or can be cleared from the MCU 20 non-volatile memory using a Master Access Code (MAC) and Master Reset Sequence (MRS). The MRS should include audio and/or visual warnings to prevent accidental operation. The MCU 20 may also provide a built-in siren and/or strobe 44, programmable to be activated concurrently with or subsequent to communication of an alarm situation to the MSO. The MCU 20 internal backup battery with trickle charger provides backup operation, including communication with Monitoring Service Central Station, in case of mains power interruption. A low back-up battery alert (and optional alert call to the MSO) is activated before the battery is discharged to a "non-operational" condition.

Zone type definitions are also learned/programmed in the MCU 20 and stored in non-volatile memory, for example (without limitation): entry/exit, instant, interior, delay 1, delay 2, fire (24 hour), burglary (24 hour), emergency (24 hour), additional zones (24 hour) with unique SIA identifiers, additional latchkey zones (24 hour). Current 2.4 GHz technology allows a wireless indoor range between the MCU 20 and Peripheral Units 40 of around 100 meters, which is suitable for most applications.

During operation all peripheral sensors 42 are fully supervised, by the MCU 20 and optionally by the MSO, and report any desired status including (without limitation) Battery Low, Tampering Attempt and Change of Status (open/close for door/window and detection for PIR) to the Main Control Unit 20 and optionally to the MSO, upon occurrence and/or interrogation. The MCU 20 also tracks attempted jamming of communications with supervised Peripheral Units 40 and supervisory failures, and optionally reports to the MSO. The MCU 20's built-in digital communicator 24 supports most major communications formats, enabling two-way communication protocol with the MSCS, for alarm reception, verification and analysis, remote programming, and any other desired functions. Peripheral Units 40 signal a "low battery" alert condition to the MCU 20 (and optionally to the MSO) a preset time interval before full battery discharge.

According to the preferred embodiment of the invention, the MCU 20 can be programmed and configured by:
1. A local computer, for example a personal computer (PC) 38, via a standard RJ11, USB or RS232 connection, or any other suitable wired or wireless connection, in conjunction with MCU programming software;
2. An accessory or built-in modem connection to a remote computer, for example remote uploading/downloading by the MSO from the MSCS; or
3. Data entry through the MCU 20 keypad and display (for basic programming only).

Through the remote connection the MSO can fully control system activation and deactivation, perform system maintenance, upload commands (e.g. "listen in" at high or low volume), and/or receive reports of situations on the secured premises, thereby enabling an appropriate response.

An optional built-in cellular radio or connection to an external cellular phone 17 or two-way pager (not shown) provides the primary communications link, or a backup communications link, to the MSCS in case of telephone line failure or sabotage by an intruder. The system may also provide a Telephone Line Monitoring (TLM) feature, which checks the state of the telephone line at predetermined intervals, identifies line failure or sabotage, sounds an audio alarm and/or (where a backup line is provided) notifies the MSO via the backup cellular or pager communications link. The cellular phone 17 can also be used instead of a conventional telephone line 28 as the main telephone connection to the MSO, with or without a backup communications link.

The system may communicate on a dedicated telephone line 28, or share a telephone line with other devices. In shared telephone line installations, the system of the invention may be implemented with a line seizure device, for example an RJ-31X/CA-38A box, and the telephone line seizure function will interrupt any telephone call in progress in response to an alarm condition and seize the telephone line to call the MSCS.

The system of the invention may be advantageously used in conjunction with a telephone set, preferably a 2.4 GHz (or other wireless frequency) cordless telephone 10 having a base station 11 and handset 12, which may include an expanded keypad 12a with special function buttons 12b and a display 12c for activation, control and supervision of all major system security functions. This allows for DTMF remote control access of security system, through which selected security features can be activated and deactivated (using appropriate DTMF access codes) from a remote telephone through a connection, for example RS232, between the base station 11 and the MCU 20. A corded telephone may also may also be used for this purpose. In the preferred embodiment the invention is also home automation compatible through X10 port 37, which allows for the timed or remote control of lighting, HVAC etc.

The optional telephone accessory 10 is preferably a cordless single- or multi-line, single- multi-handset instrument. Each cordless telephone handset 12 communicates with the cordless base station 11 by conventional communications protocols, preferably at 2.4 GHz but optionally at lower frequencies (for example 900 MHz). The cordless handset 12 may be modified to include additional security-related buttons and displays as selected, and preferably provides the following features:
1. A multi-function LCD display 12c, minimum two-line, for displaying information, such as caller ID code, called number, and alarm status and messages;
2. Alarm arming and disarming, whereby the MCU 20 can be programmed for "one touch" arming on the handset 12; and
3. Panic Alarm activation by depressing a preset key or simultaneously depressing a combination of keys, for example the "*" and "#" keys.

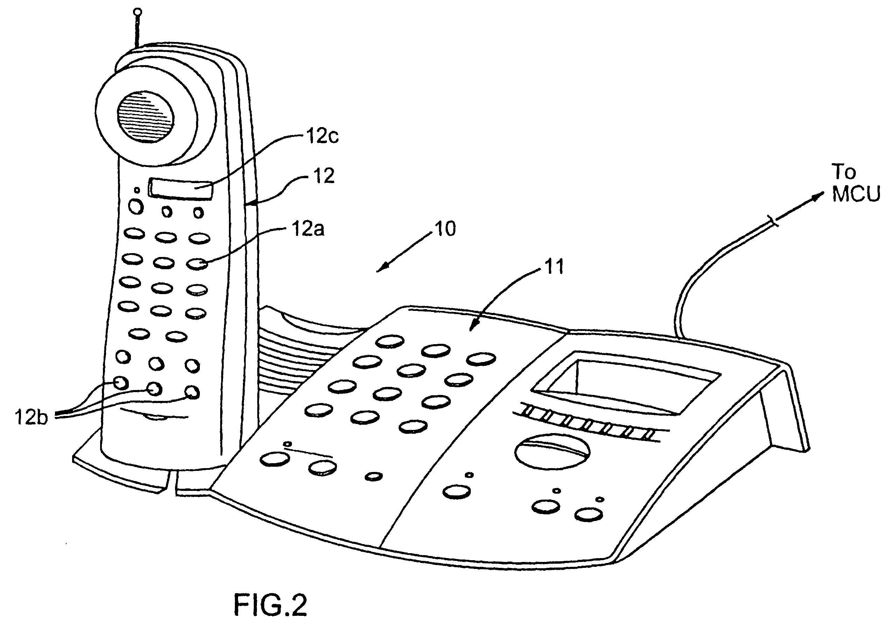

Figure 2 illustrates by way of example a cordless telephone 10 which may be used in conjunction with the system of Figure 1, comprising a handset 12 in communication with a base station 11. A keypad 12a is provided for dialing the telephone, and for entering alphanumeric data for programming and setting the alarm system in conjunction with special function buttons 12b. A display 12c, for example an LCD display window, provides user information in both the telephone and alarm system modes.

The default mode of the cordless telephone handset 12 and base station 11 should be telephone mode. When switched to security mode, the telephone 10 will remain in security mode for a preset interval after the last command, then return automatically to telephone status. Upon command, the telephone 10 will switch back to telephone mode without any delay.

In addition to a standard keypad and telephone function buttons, two dedicated security buttons 12b may be provided on the cordless handset 12: A "Select security Mode" button and an "Enter" or "OK" button. A graphic, backlit LCD display 12c may be used to perform the security operational requirements, displaying a selection of 4 to 8 menus with 3 to 4 submenu levels.

In security mode, the cordless handset 12 should be able to transmit strings of at least 8 to 12 digits to the MCU 20 via the cordless base station 11. DTMF coded digits are sufficient for this purpose. Any other format of digital coding may be used. Decoding of the data sent by the cordless handset 12 is implemented by the MCU 20. In security mode, the cordless handset 12 (or any additional dedicated control unit) reads the sequence of keypad operations, stores it in a buffer and sends it out to the MCU 20 when an "Enter/OK" button 12b is depressed.

A full alphanumeric data transmission is preferred. A full display configuration or setup may require 2,000 to 3,000 bit or 250 to 400 byte capacity. DTMF code is typically too slow for the amount of data required for this function, so another digital coding format may be used. The cordless handset 12 (or additional dedicated control unit) should also be able to receive data sent by the MCU 20 and to display it on the handset display 12c.

The telephone base station 11 serves merely as a transparent repeater (i.e. with no additional information processing) for communication between the cordless handset 12 and the MCU 20. Accordingly, the telephone base station 11 is preferably provided with a communication channel (serial format is preferred) to enable two-way communication. The MCU 20 receives information input by the user via the handset 12, and responds by transmitting to the handset 12 information regarding the display format and content. The MCU 20 is thus connected to the cordless base 11 DTMF generator and display driver.

Another optional accessory for the system of the invention is a keychain-size battery-powered remote control 19 with any desired number of control buttons, which enable remote arming/disarming of the security system. Each remote control unit 19 is characterized by a unique factory-programmed ID code, which is used for the home monitoring feature. A 2.4 GHz transceiver allows for both remote control of system functions and remote monitoring of status, including alarm and low battery indications.

To install the system of the invention, the installer selects a location for the Main Control Unit 20 and connects it to mains power supply (through an appropriate standard low-voltage power adapter, preferably with an approved AC isolation transformer). The installer determines the location of each Peripheral Unit 40 and installs the Peripheral Units 40 in the selected locations. The installer connects a digital processing device, for example a personal computer (PC) 38, to the communications port 39 provided in the MCU 20 (or in the case of a wireless connection, sets up the PC 38 within range of the communications port 39), and activates the programming software, which may be contained on a CD ROM or other media packaged with the system. The setup software initiates and checks communication with the Main Control Unit 20, and through a series of menus and/or other user interfaces, the setup software guides the installer to enter the Master Access Code (a default Master Access Code is supplied with the system) in order to initiate system installation and programming.

The setup software guides the installer to enter the other lower level access codes and all programmable Main Control Unit 20 parameters (e.g. exit/entry time delays, etc.) or to specify the use of default settings. The setup software guides the installer to enter the locations of the Peripheral Units 40 and each Peripheral Unit's setup parameters including zone type (e.g. Entry/Exit, Instant, Interior, Delay 1, Delay 2, Fire (24 hour), Burglary (24 hour), Emergency (24 hour), Additional Zones (24 hour) with unique SIA identifiers, Additional Latchkey Zones (24 hour) etc.) and zone attribute (Audible/Silent, Chime, bypass, latchkey etc.), and to activate each of the Peripheral Units 40 (for example by inserting the battery) at a point where the MCU 20 is enabled to receive the ID code of the Peripheral Unit 40, so that the MCU 20 can "learn" the ID code of each Peripheral Unit 40. The installer may also setup user-programmable access code attribute (e.g. zone bypass, duress, guest one-time code).

The setup software guides the installer to connect the Main Control Unit 20 to the telephone line 28. If the required Line Seizure hardware is installed, the setup software guides the installer to enable this feature. The installer tests the system installation in test mode, and may register the system by calling a prearranged Monitoring Service Operator. The MSO, in turn, contacts the MCU 20 to verify correct installation, make any necessary programming changes and activate the system in fully operational mode.

Thereafter the system can be programmed on-site by the installer, by means of an on-site PC 38 and cable (or wireless) connection; or remotely by the Monitoring Service Operator from the MSCS or other remote location, by means of a remote PC (not shown) and a modem. Limited on-site programming is available directly from Main Control Unit keypad and display, according to the system manual. All functions programmable through the Main Control Unit keypad and display can also be programmed via upload/download.

In operation, the system is armed by:
1. "Away" arming, all interior zones and perimeter zones active, by entering the access code, pressing the "Away" arming button and exiting premises through a designated door;
2. "Home" arming, only perimeter zones active, by entering the access code and pressing the "Home" arming button without exiting the premises.
3. Bypass arming (Home or Away) via the MCU 20 keypad, enabling arming with bypass of selected interior and/or perimeter zones, by entering the access code followed by bypass codes for the sensor(s) 42 to be bypassed and then pressing the "Home" or "Away" arming button.
4. Auto arming via the MCU keypad, with auto bypass, enables programming the system to arm itself at a predetermined time, automatically bypassing any zones not ready for arming at that time.

The system will thereafter sound an alarm condition if any of the sensors 42 are tripped or the "Panic" button is depressed on any remote device. The alarm may be silent or audible, depending on the programming, and initiates a blinking message on the MCU display identifying the type of alarm, and optionally a report to the Monitoring Service Operator. In embodiments of the system which are not monitored, the alarm would be audible and a voice dialer or DTMF dialer could be employed to send a pre-recorded message or code to one or more pre-programmed telephone numbers stored in the MCU 20 memory.

The "Panic" mode initiates an alarm condition whether or not the system is armed, and preferably can be activated by pressing a "Panic" button on the MCU 20, by pressing the "Panic" button on the Keychain Remote Control 19, or by pressing a selected combination of keys (for example "*" and "#") on the optional cordless telephone handset 12.

To reduce opportunities for false alarms, the system provides an audible exit delay and audible exit fault signal when the system is "Away" armed. Preferably, when the system is "Away" armed detection of motion within the premises without detection of a perimeter violation will initially activate the local siren 44 only, and will alert the MSO only after a preset interval. Likewise, when the system is "Home" armed a perimeter violation will initially activate the local siren 44 only, and will alert the MSO only after a preset interval.

A security sensor or an environmental sensor (for example a temperature or humidity sensor) indicates an alarm condition by transmitting its characteristic RF signal to the Main Control Unit 20. In the preferred embodiment the MCU 20 then sends a signal to the sensor 42 requesting a status signal from the sensor 42, to verify the alarm condition. The main control unit 20 may also, or alternatively, request a status signal from a neighboring sensor 42 (for example a motion detector in the vicinity of a door contact that goes into an alarm condition). If the activated sensor 42 and/or the neighboring sensor 42 indicates in response to the verification request that no alarm condition exists, the main control unit 20 determines whether the alarm indication was false according to parameters programmed into the MCU 20. This can reduce the likelihood of false alarms to produce a more reliable alarm system.

Moreover, the verification request signal transmitted by the main control unit 20 can be an 'acknowledgment' to the sensor 42 that its signal disruption has been logged by the Main Control Unit 20, failing which after a predetermined interval the sensor 42 may transmit another signal to the main control unit 20 requesting an acknowledgment signal.

In either case the main control unit 20 or the sensor 42 preferably continue to transmit requests for sensor status or acknowledgment until a response signal is received. Thus, the two-way communication between the Main Control Unit 20 and the sensors 42 provide a "smart" system which can verify indications and system conditions before communicating with a monitoring station or activating an alarm indicator 44.

The system of the invention preferably attempts to call the Monitoring Service Operator in order to report security status when any valid reporting event occurs. The system may be programmed to use DTMF or pulse dialing, and contacts the MSO via the MSO's programmed telephone number (or numbers if more than one is available). The system will continue dialing the preset number of times until the MSO answers with the appropriate handshaking procedure.

Once contact with the MSO is established, the appropriate reporting format (programmed when the system is installed) is initiated. The digital communicator 24 in the MCU 20 supports all major communication reporting formats. As recommended by the Security Industry Association (SIA) in its study of data formats (October 1997), the system preferably uses half-duplex asynchronous FSK modulation, operating at 300 baud, with a single modem serving both for communication with the MSO and for remote programming. This standard enables a wide variety of options and information transmission, and is likely to be adopted by most, if not all, MSO's. In an alarm mode the MCU 20 sends a code to the MSO indicating the event that occurred, time stamped by the real-time clock integrated into the MCU 20, enabling the MSO to provide an appropriate response.

As noted above, in embodiments of the system which are not monitored, the built in voice dialer or DTMF dialer could be employed to send a pre-recorded message or code to one or more pre-programmed telephone numbers stored in the MCU 20 memory to contact, for example, a cellular telephone or pager carried by a homeowner, security manager etc.

The device preferably operates in three modes: Active Mode, in which data is actively being transferred between the MCU 20 and Peripheral Units 40; etc.; Standby Mode, in which the Peripheral Units 40 are communicating with the MCU 20 periodically solely for maintaining network synchronization and control; and Suspend Mode, in which selected Peripheral Units 40 are not communicating with the network. A 'wakeup' signal from the MCU 20 is required to restore communication with the MCU 20. This mode is ideal for power conservation and selective zone control and deactivation.

The Peripheral Units 40 may also include a microphone/speaker (not shown) for two-way voice communication within or about the premises and for "listening in" by the MSO; any number and variety of sensors 42; one or more wired or wireless video cameras (not shown) for communicating a video surveillance signal to the MCU 20 which can be accessed remotely through the communications link; and/or one or more alarm indicators 44.

The Peripheral Units 40 can be reconfigured, added and removed from the system as needed. For example, in preparation for an off-hours delivery a sensor 42 on the shipping door and a neighboring motion detector can be deactivated, leaving all other sensors 42 active. The system may also activate an actuator controlling the shipping door lock, allowing delivery personnel access to the premises. In this fashion each particular sensor 42, actuator 19 and alarm indicator 44 can be considered to constitute a "zone". This function should preferably be configurable from the MCU keypad.

The main control unit 20 can also be programmed to associate specified groups of peripherals 40 as separate zones, for ease of activating/deactivating portions of the system. These groups can be reconfigured on site or remotely, as desired.

It is also possible using the system of the invention to transmit from, for example a sound detector, rather than simply an indication that sensor 42 has detected a sound, a digital representation of the sound level. Thus, the Main Control Unit 20 can be programmed to ignore sound levels below a certain threshold, to account for ambient noise levels. The threshold can change by a preprogrammed schedule, for example a lower threshold indicates an alarm condition at night, and the threshold can be changed remotely or on site as desired.

Troublesome zones can be repaired or isolated from the system. For example, a vibration sensor 42 that activates persistently over a predetermined interval can be reconfigured, or the Main Control Unit 20 can discriminate from other Peripheral Units 40 by, for example, not communicating with the monitoring service when the troublesome sensor indicates an alarm condition, but still indicating the alarm condition locally by an alarm indicator 44 and/or in the Main Control Unit 20's event log, or by auto-dialing one or more stored telephone/pager numbers and playing a pre-recorded message or sending a preset code.

In the case of a monitored system, the Monitoring Service Operator can configure the Main Control Unit 20 to limit the ability of the occupier of the premises to configure certain Peripheral Units or perform other procedures In the case of a homeowner installed system, the system can be programmed to remain inactive until an MSO conducts a diagnostic to confirm that the Main Control Unit 20 and all Peripheral Units 40 are operating properly.

Monitoring of so-called "latchkey children" is facilitated by the invention. Preprogrammed arrival times can be selected for one or more children, and the auto-dial or alarm functions can be initiated automatical if a child has not disarmed the system by the arrival time. The child can alternatively wear a sensor 42, which will be detected by the system upon arrival of the child, if desired disarming a designated entry point. These parameters can be reconfigured remotely by the homeowner if circumstances so dictate.

Connection of the system to a personal computer enables Internet access and other on-line functions and capabilities, if desired. This can offer an alternative to telephone, PCS etc. for remote management of the system.

The following standards may be relevant to the above description and are incorporated herein by reference:

### US Standards

1. CFR 47, Part 15 (FCC).
2. CFR 68.
3. SIA Audio Verification Standards.
4. SIA Control Panel Standards.
5. UL-609 Local Burglar Alarm Units and Systems.
6. UL-639 Intrusion Detection Units.
7. UL-1023 Burglar Alarm System Unit, Household
8. UL-1610 Central Station Burglar Alarm Systems.
9. UL-1635 Digital Burglar Alarm.
10. UL-1641 Installation and Classification of Residential Burglar Alarm Systems.

### Canadian Standards

1. ULC-5306 Standard for Intrusion Detection Units.

### EEC Standards

1. CEPT/ERC/REC 70-03E.
2. EN 300-220 Radio Equipment and Systems; Short Range Devices Operating in the 25 MHz - 1 GHz Range with Power Level up to 500 MW.
3. EN 41003 Electrical Safety Standards.
4. EN 50081 and EN 50082 Electromagnetic Compatibility.
5. EN 50111-3-1 Alarm Systems In and Around Buildings.
6. EN 50131-2-2 Alarm System - Intrusion System.
7. EN 55011 Limits and Methods of Measurement of Radio Disturbance Characteristic of Industrial, Scientific and Medical RF Equipment.
8. EN 60950 Safety of Information Technology Equipment Including Electrical Business Equipment.

A preferred embodiment of the invention having been thus described by way of example, it will be appreciated by those skilled in the art that certain adaptations and modifications may be made without departing from the scope of the invention. The invention is intended to include all such variations and modifications as fall within the scope of the claims.

## Claims

1. A security alarm system, comprising
one or more peripheral units, and
a main control unit comprising an RF transceiver for communicating with the one or more peripheral units,
one or more of the peripheral units comprising an RF transceiver enabling the one or more of the peripheral units to both send a signal to the main control unit to indicate an alarm condition, and to receive data from the main control unit for configuring or controlling the one or more peripheral devices,
whereby the main control unit receives a signal from the one or more peripheral units to indicate an alarm condition, and whereby the main control unit communicates data to one or more peripheral devices to configure or control the peripheral devices, or both.

2. The security alarm system of claim 1 wherein the main control unit comprises a communicator for controlling a transfer of data between the system and a remote location over a communications link.

3. The security alarm system of claim 1 wherein a keypad or a display, or both, for entering information into and displaying information from the main control unit are contained in a remote unit comprising a cordless telephone handset.

4. The security alarm system of claim 1 wherein in response to an indication of an alarm condition by a sensor, the main control unit requests a status signal from the sensor to verify the alarm condition.

5. The security alarm system of claim 1 wherein in response to an indication of an alarm condition by a sensor, the main control unit processes a status signal from one or more neighboring sensors to verify the alarm condition.

6. The security alarm system of claim 1 wherein the main control unit is programmable via a keypad built into the main control unit.

7. The security alarm system of claim 1 wherein the transceiver communicates at 2.4 GHz.

8. The security alarm system of claim 1 wherein the peripheral units include sensors comprising one or more of door/window sensors, PIR motion sensors, glass break detectors, environmental sensors (temperature sensors, moisture detectors etc.), smoke detectors, combustion gas detectors, carbon monoxide detectors, alarm indicators

9. The security alarm system of claim 8 wherein each peripheral unit is **characterized by** a unique preprogrammed ID code.

10. A method of programming a security alarm system comprising one or more peripheral units and a main control unit comprising an RF transceiver for communicating with the one or more peripheral units, whereby the main control unit receives data from the one or more peripheral units to indicate an alarm condition, comprising the steps of
a. entering data into a digital processing device to program the main control unit, and
b. communicating data from the main control unit to the one or more peripheral devices to configure or control the peripheral devices, or both.

11. The method of claim 10 including the step of controlling a transfer of data between the system and a remote location over a communications link.

12. The method of claim 10 wherein a keypad or a display, or both, for entering information into and displaying information from the main control unit are contained in a remote unit comprising a cordless telephone handset.

13. The method of claim 10 including the step of, in response to an indication of an alarm condition by a sensor, requesting a status signal from the sensor to verify the alarm condition.

14. The method of claim 10 including the step of, in response to an indication of an alarm condition by a sensor, processing a status signal from one or more neighboring sensors to verify the alarm condition.

15. The method of claim 10 wherein the main control unit is programmable via a keypad built into the main control unit.

16. The method of claim 10 wherein the wireless transceiver communicates at 2.4 GHz.

17. The method of claim 10 wherein peripheral units include sensors comprising one or more of door/window sensors, PIR motion sensors, glass break detectors, environmental sensors (temperature sensors, moisture detectors etc.), smoke detectors, combustion gas detectors, carbon monoxide detectors, alarm indicators.

18. The method of claim 10 wherein each peripheral unit is **characterized by** a unique preprogrammed ID code.

19. The security alarm system of claim 1 in which the main control unit can be connected to a digital processing device through a digital communications port, whereby data entered into the digital processing device programs the main control unit.

20. The method of claim 10 including the step of programming the main control unit by entering data into a digital processing device connected to a digital communications port in the main control unit.

21. A method of operating a security alarm system comprising one or more peripheral units and a main control unit, whereby the main control unit receives data from the one or more peripheral units to indicate an alarm condition, comprising the steps of:
a. transmitting from the main control unit and receiving at the one or more peripheral units, a signal for controlling or configuring the one or more peripheral units, or both; and
b. transmitting from the one or more of the peripheral units and receiving at the main control unit, a signal indicating an alarm condition.

22. The method of claim 21 wherein in response to an indication of an alarm condition transmitted by the one or more peripheral units, the main control unit requests a status signal from the one or more peripheral units to verify the alarm condition.

23. The method of claim 21 wherein in response to an indication of an alarm condition by the one or more peripheral units, the main control unit processes a status signal from one or more neighboring peripheral units to verify the alarm condition.

## Patentansprüche

1. Alarmsystem mit einer oder mehreren peripheren Einheiten und einer Hauptsteuereinheit, welche ein HF-Sende-/Empfangsgerät zur Kommunikation mit der einen oder mehreren peripheren Einheiten aufweist, wobei eine oder mehrere der peripheren Einheiten ein HF-Sende-/Empfangsgerät umfassen, das es der einen oder mehreren peripheren Einheiten ermöglicht, sowohl ein Signal an die Hauptsteuereinheit zu senden, um einen Alarmzustand anzuzeigen, als auch Daten von der Hauptsteuereinheit zum Konfigurieren oder Steuern der einen oder mehreren peripheren Einheiten zu empfangen, wobei die Hauptsteuereinheit ein Signal von der einen oder mehreren peripheren Einheiten empfängt, um einen Alarmzustand anzuzeigen, und wobei die Hauptsteuereinheit Daten zu einer oder mehreren peripheren Einheiten übermittelt, um die peripheren Einheiten zu konfigurieren oder zu steuern oder beides.

2. Alarmsystem nach Anspruch 1, wobei die Hauptsteuereinheit einen Kommunikator zur Steuerung einer Datenübertragung über eine Nachrichtenverbindung zwischen dem System und einem entfernt liegenden Ort umfasst.

3. Alarmsystem nach Anspruch 1, wobei in einer entfernt liegenden Einheit, die einen schnurlosen Telefon-Handapparat umfasst, eine Tastatur oder ein Display oder beides zur Eingabe und Anzeige von Informationen von der Hauptsteuereinheit enthalten ist.

4. Alarmsystem nach Anspruch 1, wobei als Reaktion auf eine Anzeige eines Alarmzustandes durch einen Sensor die Hauptsteuereinheit ein Statussignal von dem Sensor abfragt, um die Richtigkeit des Alarm-Zustandes zu überprüfen.

5. Alarmsystem nach Anspruch 1, wobei als Reaktion auf eine Anzeige eines Alarmzustandes durch einen Sensor die Hauptsteuereinheit ein Statussignal von einem oder mehreren benachbarten Sensoren verarbeitet, um die Richtigkeit des Alarmzustandes zu überprüfen.

6. Alarmsystem nach Anspruch 1, wobei die Hauptsteuereinheit über eine in der Hauptsteuereinheit eingebaute Tastatur programmierbar ist.

7. Alarmsystem nach Anspruch 1, wobei das Sende-/Empfangsgerät mit 2,4 GHz kommuniziert.

8. Alarmsystem nach Anspruch 1, wobei die peripheren Einheiten Sensoren enthalten, die einen oder mehrere Tür-/Fenstersensoren, passive Infrarot-Bewegungssensoren, Glasbruchdetektoren, Umgebungssensoren (Temperatursensoren, Feuchtigkeitssensoren usw.), Rauchmelder, Verbrennungsgasdetektoren, Kohlenmonoxiddetektoren, Alarmanzeigen umfassen.

9. Alarmsystem nach Anspruch 8, wobei jede periphere Einheit durch einen eigenen vorprogrammierten Erkennungscode **gekennzeichnet** ist.

10. Verfahren zum Programmieren eines Alarmsystems, das eine oder mehrere periphere Einheiten und eine Hauptsteuereinheit umfasst, die ein HF-Sende-/Empfangsgerät zur Kommunikation mit der einen oder mehreren peripheren Einheiten umfasst, wodurch die Hauptsteuereinheit Daten von der einen oder mehreren peripheren Einheiten empfängt, um einen Alarmzustand anzuzeigen, was die folgenden Schritte umfasst.
a. Dateneingabe in eine digitale Verarbeitungseinrichtung, um die Hauptsteuereinheit zu programmieren und
b. Übermittlung von Daten von der Hauptsteuereinheit zu der einen oder mehreren peripheren Einheiten, um die peripheren Einheiten zu konfigurieren oder zu steuern oder beides.

11. Verfahren nach Anspruch 10, einschließlich des Schrittes der Steuerung einer Datenübertragung über eine Nachrichtenverbindung zwischen dem System und einem entfernt liegenden Ort.

12. Verfahren nach Anspruch 10, wobei in einer entfernt liegenden Einheit, die einen schnurlosen Telefon-Handapparat umfasst, eine Tastatur oder ein Display oder beides zur Eingabe von Informationen und Anzeige von Informationen von der Hauptsteuereinheit enthalten ist.

13. Verfahren nach Anspruch 10, einschließlich des Schrittes der Abfrage eines Statussignals von einem Sensor als Reaktion auf eine Anzeige eines Alarmzustandes durch den Sensor, um die Richtigkeit des Alarmzustandes zu überprüfen.

14. Verfahren nach Anspruch 10, einschließlich des Schrittes der Verarbeitung eines Statussignals von einem oder mehreren benachbarten Sensoren als Reaktion auf eine Anzeige eines Alarmzustandes durch einen Sensor, um die Richtigkeit des Alarmzustandes zu überprüfen.

15. Verfahren nach Anspruch 10, wobei die Hauptsteuereinheit über eine Tastatur programmierbar ist, die in die Hauptsteuereinheit eingebaut ist.

16. Verfahren nach Anspruch 10, wobei das drahtlose Sende-/Empfangsgerät mit 2,4 GHz kommuniziert.

17. Verfahren nach Anspruch 10, wobei die peripheren Einheiten Sensoren enthalten, die einen oder mehrere Tür-/Fenstersensoren, passive Infrarot-Bewegungssensoren, Glasbruchdetektoren, Umgebungssensoren (Temperatursensoren, Feuchtigkeitssensoren usw.), Rauchmelder, Verbrennungsgasdetektoren, Kohlenmonoxiddetektoren, Alarmanzeigen umfassen.

18. Verfahren nach Anspruch 10, wobei jede periphere Einheit durch einen eigenen programmierten Erkennungscode **gekennzeichnet** ist.

19. Alarmsystem nach Anspruch 1, in dem die Hauptsteuereinheit mit einer digitalen Verarbeitungseinrichtung durch einen digitalen Kommunikationskanal verbunden werden kann, wodurch Daten, die in die digitale Verarbeitungseinrichtung eingegeben wurden, die Hauptsteuereinheit programmieren.

20. Verfahren nach Anspruch 10, einschließlich des Schrittes des Programmierens der Hauptsteuereinheit durch Dateneingabe in eine digitale Verarbeitungseinrichtung, die mit einem digitalen Kommunikationskanal in der Hauptsteuereinheit verbunden ist.

21. Verfahren zum Betreiben eines Alarmsystems, das eine oder mehrere periphere Einheiten und eine Hauptsteuereinheit umfasst, wodurch die Hauptsteuereinheit Daten von der einen oder mehreren peripheren Einheiten empfängt, um einen Alarmzustand anzuzeigen, was die folgenden Schritte umfasst:
a. Senden eines Signals von der Hauptsteuereinheit und Empfangen von einer oder mehreren peripheren Einheiten zum Steuern oder Konfigurieren von der einen oder mehreren peripheren Einheiten oder von beidem; und
b.Senden eines Signals, das einen Alarmzustand anzeigt, von der einen oder mehreren peripheren Einheiten und Empfangen von der Hauptsteuereinheit.

22. Verfahren nach Anspruch 21, wobei die Hauptsteuereinheit als Reaktion auf eine Anzeige eines Alarmzustandes, die von der einen oder mehreren peripheren Einheiten gesendet wird, ein Statussignal von der einen oder mehreren peripheren Einheiten abruft, um die Richtigkeit des Alarmzustandes zu überprüfen.

23. Verfahren nach Anspruch 21, wobei die Hauptsteuereinheit als Reaktion auf eine Anzeige eines Alarmzustandes durch die eine oder mehrere periphere Einheiten ein Statussignal von der einen oder mehreren benachbarten peripheren Einheiten verarbeitet, um die Richtigkeit des Alarmzustandes zu überprüfen.

## Revendications

1. Système d'alarme de sécurité, comportant
une ou plusieurs unités périphériques, et
une unité de commande principale comportant un émetteur-récepteur radiofréquence (RF) pour communiquer avec la ou les plusieurs unités périphériques,
une ou plusieurs des unités périphériques comportant un émetteur-récepteur RF permettant à la ou les plusieurs unités périphériques à la fois d'envoyer un signal à l'unité de commande principale pour indiquer une condition d'alarme, et de recevoir des données à partir de l'unité de commande principale pour configurer ou commander la ou les plusieurs dispositifs périphériques,
par lequel l'unité de commande principale reçoit un signal à partir de la ou des plusieurs unités périphériques pour indiquer une condition d'alarme; et ainsi l'unité de commande principale communique des données à un ou plusieurs dispositifs périphériques pour configurer ou commander les dispositifs périphériques, ou les deux.

2. Système d'alarme de sécurité selon la revendication 1, dans lequel l'unité de commande principale comporte un dispositif de communication pour commander un transfert de données entre le système et un emplacement distant via une liaison de communications.

3. Système d'alarme de sécurité selon la revendication 1, dans lequel un pavé numérique ou un afficheur, ou les deux, destinés à entrer des informations dans l'unité de commande principale et à afficher des informations provenant de celle-ci, sont contenus dans une unité distante comportant un combiné téléphonique sans fil.

4. Système d'alarme de sécurité selon la revendication 1, dans lequel, en réponse à une indication d'une condition d'alarme d'un capteur, l'unité de commande principale demande un signal d'état auprès du capteur pour vérifier la condition d'alarme.

5. Système d'alarme de sécurité selon la revendication 1, dans lequel, en réponse à une indication d'une condition d'alarme d'un capteur, l'unité de commande principale traite un signal d'état provenant d'un ou de plusieurs capteurs voisins pour vérifier la condition d'alarme.

6. Système d'alarme de sécurité selon la revendication 1, dans lequel l'unité de commande principale est programmable via un pavé numérique intégré dans l'unité de commande principale.

7. Système d'alarme de sécurité selon la revendication 1, dans lequel l'émetteur-récepteur communique à 2,4 GHz.

8. Système d'alarme de sécurité selon la revendication 1, dans lequel les unités périphériques incluent des capteurs comportant un ou plusieurs capteurs de porte/fenêtre, des capteurs de mouvement PIR, des détecteurs de bris de verre, des capteurs environnementaux (capteurs de température, détecteurs d'humidité, etc.), des détecteurs de fumée, des détecteurs de gaz de combustion, des détecteurs de monoxyde de carbone, et des indicateurs d'alarme.

9. Système d'alarme de sécurité selon la revendication 8, dans lequel chaque unité périphérique est **caractérisée par** un code d'identification (ID) pré-programmé unique.

10. Procédé pour programmer un système d'alarme de sécurité comportant une ou plusieurs unités périphériques et une unité de commande principale comportant un émetteur-récepteur RF pour communiquer avec la ou les plusieurs unités périphériques, par lequel l'unité de commande principale reçoit des données à partir de l'une ou des plusieurs unités périphériques pour indiquer une condition d'alarme, comportant les étapes consistant à :
a. entrer des données dans un dispositif de traitement numérique pour programmer l'unité de commande principale, et
b. communiquer les données de l'unité de commande principale au dispositif ou aux plusieurs dispositifs périphériques pour configurer ou commander les dispositifs périphériques, ou les deux.

11. Procédé selon la revendication 10, incluant l'étape consistant à commander un transfert de données entre le système et un emplacement distant via une liaison de communications.

12. Procédé selon la revendication 10, dans lequel un pavé numérique ou un afficheur, ou les deux, destinés à entrer des informations dans l'unité de commande principale et à afficher des informations provenant de celle-ci, sont contenus dans une unité distante comportant un combiné téléphonique sans fil.

13. Procédé selon la revendication 10, incluant l'étape consistant à, en réponse à une indication d'une condition d'alarme d'un capteur, demander un signal d'état auprès du capteur pour vérifier une condition d'alarme.

14. Procédé selon la revendication 10, incluant l'étape consistant à, en réponse à une indication d'une condition d'alarme d'un capteur, traiter un signal d'état provenant d'un ou de plusieurs capteurs voisins pour vérifier la condition d'alarme.

15. Procédé selon la revendication 10, dans lequel l'unité de commande principale est programmable via un pavé numérique intégré dans l'unité de commande principale.

16. Procédé selon la revendication 10, dans lequel l'émetteur-récepteur sans fil communique à 2,4 GHz.

17. Procédé selon la revendication 10, dans lequel les unités périphériques incluent des capteurs comportant un ou plusieurs capteurs de porte/fenêtre, des capteurs de mouvement PIR, des détecteurs de bris de verre, des capteurs environnementaux (capteurs de température, détecteurs d'humidité, etc.), des détecteurs de fumée, des détecteurs de gaz de combustion, des détecteurs de monoxyde de carbone, et des indicateurs d'alarme.

18. Procédé selon la revendication 10, dans lequel chaque unité périphérique est **caractérisée par** un code d'identification (ID) pré-programmé unique.

19. Système d'alarme de sécurité selon la revendication 1, dans lequel l'unité de commande principale peut être connectée à un dispositif de traitement numérique via un port de communications numériques, ainsi des données entrées dans le dispositif de traitement numérique programment l'unité de commande principale.

20. Procédé selon la revendication 10, incluant l'étape consistant à programmer l'unité de commande principale en entrant des données dans un dispositif de traitement numérique connecté à un port de communications numériques de l'unité de commande principale.

21. Procédé pour faire fonctionner un système d'alarme de sécurité comportant une ou plusieurs unités périphériques et une unité de commande principale, par lequel l'unité de commande principale reçoit des données à partir de la ou des plusieurs unités périphériques pour indiquer une condition d'alarme, comportant les étapes consistant à :
a. transmettre à partir de l'unité de commande principale et recevoir au niveau de la ou des plusieurs unités périphériques, un signal pour commander ou configurer la ou les plusieurs unités périphériques, ou les deux, et
b. transmettre à partir de la ou des plusieurs unités périphériques et recevoir au niveau de l'unité de commande principale, un signal indiquant une condition d'alarme.

22. Procédé selon la revendication 21, dans lequel, en réponse à une indication d'une condition d'alarme transmise par la ou les plusieurs unités périphériques, l'unité de commande principale demande un signal d'état depuis la ou les plusieurs unités périphériques pour vérifier la condition d'alarme.

23. Procédé selon la revendication 21, dans lequel, en réponse à une indication d'une condition d'alarme de la ou des plusieurs unités périphériques, l'unité de commande principale traite un signal d'état provenant d'une ou de plusieurs unités périphériques voisines pour vérifier la condition d'alarme.
